# EUROPEAN PATENT SPECIFICATION

(11) **EP 2 996 428 B1**
(45) Date of publication and mention of the grant of the patent: **13.11.2019**
(21) Application number: 14795178.4
(22) Date of filing: 04.05.2014
(51) Int. Cl.: H04W 76/15, H04W 92/20

(54) **LINK ESTABLISHMENT METHOD, BASE STATION, AND SYSTEM**
VERBINDUNGSAUFBAUVERFAHREN, BASISSTATION UND SYSTEM
PROCÉDÉ D'ÉTABLISSEMENT DE LIAISON, STATION DE BASE ET SYSTÈME

(30) Priority: 07.05.2013 CN 201310164843
(43) Date of publication of application: 16.03.2016
(73) Proprietor: ZTE Corporation, Shenzhen, Guangdong 518057 (CN)
(72) Inventor: XIE, Feng, Shenzhen Guangdong 518057 (CN); HUANG, Ying, Shenzhen Guangdong 518057 (CN); GAO, Yin, Shenzhen Guangdong 518057 (CN); CHEN, Lin, Shenzhen Guangdong 518057 (CN)
(74) Representative: Tiburzi, Andrea
(86) International application number: PCT/CN2014/076719
(87) International publication number: WO 2014/180280

(56) References cited:
- WO-A1-2011/109544
- CN-A- 101 473 584
- CN-A- 102 378 374
- GB-A- 2 455 074
- US-A1- 2011 201 341

## Description

### Technical Field

The present invention relates to the technical field of wireless communications, and more particularly, to a link establishment method, eNodeB and system.

### Background of the Related Art

With the development of wireless multimedia services, people have increasing demands for high data rates and user experience, and thus higher requirements are put forward on the system capacity and coverage of traditional cellular networks. In a conventional LTE cellular network, the macro eNodeB works as the only network element at the access side and provides access services for the UE. In order to meet user demand for higher data rates and increase the cellular network spectral efficiency, the 3GPP has introduced a low power node (LPN) as a supplement to the macro eNodeB to provide access services for the UE. The LPN has low cost, low power and is easy to be deployed, and there are usually two deployment scenarios: hot spot deployment and enhanced coverage, to effectively increase data rates of high-rate data services in indoor or outdoor hotspot areas, and to improve coverage of the remote areas or cell edge. The LPN usually is also referred to as small cell, including home evolved NodeB (HeNB), pico cell (pico), remote radio unit/head (RRU/RRH), relay node (RN), and the like.

In hotspot deployment scenarios, in order to achieve relatively high data rates and spectral efficiency, it needs to densely deploy a large number of small cells in the region. There are a series of problems in such deployment scenarios. Firstly, due to the small coverage of the small cell, the handover failure probability increases when a high-speed moving UE is passing through the small cell, thus affecting the service continuity of UE; secondly, the macro eNodeB will produce relatively serious interference to the UE in the nearby small cell, and therefore, the interference management and coordination is required to be performed between the small cell and macro eNodeB. In order to solve the mobility problem of UE, the industry puts forward a method in which the macro eNodeB ensures a basic coverage, and the UE always keeps a RRC connection with the macro eNodeB, and the small cell only works as a transmission point (TP) to provide higher data rates and meet the user's energy-saving needs. In this method, the macro eNodeB and the small cell need to exchange the delay-sensitive UE transmission point configuration or management signalings. Similarly, in order to solve the interference problem, the macro eNodeB and the small cell need to frequently exchange the delay-sensitive interference coordination related signalings. This raised higher requirements on the performance of the backhaul link (especially the delay of the backhaul link) between the macro eNodeB and the small cell. Meanwhile, service data may also need to be transmitted between the small cell and the macro eNodeB, some of the service data such as voice/video services have a relatively high requirement on the delay, while some other service data such as file downloading have a relatively low requirement on the delay.

The method of the small cell accessing to the operator network by means of the backhaul such as xDSL or cable and connecting with the macro eNodeB cannot meet the delay requirement of the backhaul link between the small cell and the macro eNodeB.

The document WO 2011/109544 A1 discloses uplink coordinated multipoint communications in a wireless network. Two eNodeBs can be connected by a backhaul communication channel and in addition by a wireless communication channel.

### Summary of the Invention

To solve the technical problem, the present invention is to provide a link establishment method, eNodeB and system to address the problem that existing backhaul links cannot meet the delay needs.

To solve the abovementioned technical problem, the present invention provides a link establishment method as defined by independent claim 1. The method comprises: a first eNodeB and a second eNodeB establishing a second link via a first link between the first eNodeB and the second eNodeB; the first eNodeB and the second eNodeB communicating via the first link and/or the second link.

Before the first eNodeB and the second eNodeB establish the second link, the first eNodeB and the second eNodeB exchanges information used to indicate a capability of establishing the second link currently, and when both the first eNodeB and the second eNodeB currently have a capability of establishing the second link via the first link, the second link is established.

The step of the first eNodeB and the second eNodeB establishing the second link comprises:
the first eNodeB and the second eNodeB exchanging information for establishing the second link via the first link;
and/or, the first eNodeB being uplink and/or downlink synchronized with the second eNodeB.

Preferably, the first link is a wired link, and the first eNodeB exchanges information with the second eNodeB through existing or newly-added messages of X2 interface or S1 interface of the wired link.

The second link is a wireless link, the information for establishing the second link comprises at least one of the following items: identification information assigned by the first eNodeB for identifying the second eNodeB in the second link; security-related capability information supported by the first eNodeB and/or the second eNodeB and used for the second link; a security-related mechanism or algorithm used for the second link; parameters of the security-related mechanism or algorithm used for the second link; wireless capability related information of the second eNodeB used for the second link.

Signals for downlink synchronization comprise at least one of the following: primary synchronization signal (PSS), secondary synchronization signal (SSS) and cell reference signal (CRS); signals for uplink synchronization comprise at least one of the following: sounding reference signal (SRS), demodulation reference signal (DMRS) and preamble.

Preferably, the step of the first eNodeB is uplink synchronized with the second eNodeB comprises:
when the second link is a wireless link, the second eNodeB transmitting a signal for uplink synchronization in a wireless manner;
the first eNodeB determining a timing adjustment amount of the first eNodeB according to the received signal for uplink synchronization, and transmitting the timing adjustment amount to the second eNodeB via the first link or in the wireless manner;
the second eNodeB is uplink synchronized with the first eNodeB according to the received timing adjustment amount.

The second eNodeB uses a particular resource or selecting a particular resource in a particular resource set to transmit the signal for uplink synchronization; the particular resource or the particular resource set is transmitted by the first eNodeB to the second eNodeB via the first link or in the wireless manner.

The second link is a wireless link, and the first eNodeB communicating with the second eNodeB via the second link comprises transmitting user-plane delay sensitive information as well as transmitting control-plane delay sensitive information through physical layer control information, MAC layer control information or a RRC layer dedicated signaling.

To solve the abovementioned technical problem, the present invention further provides an eNodeB as defined by independent claim 6. The eNodeB comprises: a link establishment unit, configured to: establish a second link with a peer-end eNodeB which communicates with the eNodeB via a first link; a communication unit, configured to: communicate with the peer-end eNodeB via the first link and/or the second link.

To solve the abovementioned technical problem, the present invention further provides a communication system as defined by independent claim 11. The system comprising a first eNodeB and a second eNodeB, and there is a first link and a second link for communication between the first eNodeB and the second eNodeB, and the first eNodeB and the second eNodeB comprise: a communication unit, configured to: communicate with the first eNodeB or the second eNodeB via the first link and/or the second link.

Preferably, the first eNodeB and the second eNodeB further comprise: a link determination unit, configured to: determine a link which the communication unit uses for communication according to attributes of information to be transmitted or a link load condition.

Preferably, the link determination unit is configured to: when the information to be transmitted is non-delay-sensitive information, the link determination unit determines that the link for communication is the first link; when the information to be transmitted is delay-sensitive information, the link determination unit determines that the link for communication is the second link.

The first link is a wired link, and the second link is a wireless link.

Preferably, the communication unit is configured to: simultaneously use the first link and the second link to communicate or use the first link and the second link to communicate in a time division manner.

Compared with the prior art, the link establishment method, eNodeB and communication system in accordance with the embodiments of the present invention establish a second link between two eNodeBs via an existing first link, so that the two eNodeBs can communicate via the first link and/or the second link, and then determine using the first link or the second link to transmit according to attributes (mainly according to the sensitivity to delay) of the information to be transmitted and/or the link load condition, so as to meet service needs and maximally save air interface link resources.

### Brief Description of Drawings

FIG. 1 is a schematic diagram of a scenario under the deployment of a small cell;
FIG. 2 is a schematic diagram of a first embodiment of link establishment method in accordance with the present invention;
FIG. 3 is a schematic diagram of a second embodiment of link establishment method in accordance with the present invention;
FIG. 4 is a schematic diagram of a process of a first eNodeB synchronizing an uplink signal with a second eNodeB;
FIG. 5 is a schematic diagram of a scenario of a method application in accordance with an embodiment of the present invention;
FIG. 6 is a schematic diagram of an example of an interface protocol stack between a small cell and a macro eNodeB according to the method embodiment of the present invention;
FIG. 7 is a schematic diagram of the process of a first application example in accordance with the method of the present invention;
FIG. 8 is a schematic diagram of the process of a second application example in accordance with the method of the present invention;
FIG. 9 and FIG. 10 are schematic diagrams of the process of the small cell and the macro eNodeB performing uplink synchronization of the second link;
FIG. 11 is a schematic diagram of the module structure of an eNodeB embodiment in accordance with the present invention;
FIG. 12 is a schematic diagram of the module structure of a signal synchronization module in FIG. 11;
FIG. 13 is a schematic diagram of the module structure of a communication system in accordance with an embodiment of the present invention.

### Preferred Embodiments of the Invention

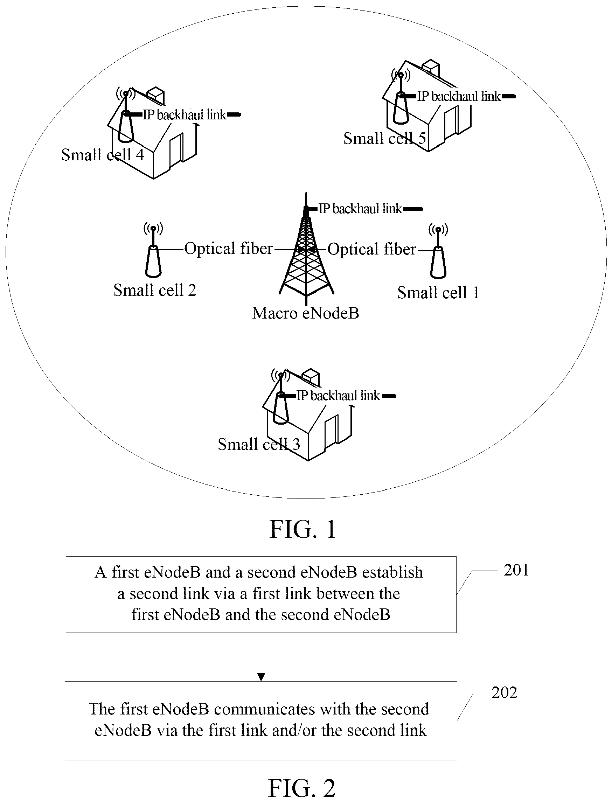

Currently, the backhaul link between the macro eNodeB and the small cell may be based on optical fiber, xDSL or cable, as the schematic diagram of the scenario under the related deployment of small cell shown in FIG. 1. As shown in FIG. 1, there may be an optical fiber or a wired IP backhaul link between the small cell 1, the small cell 2 and the macro eNodeB. Typically, in the case that the small cell is deployed by the operator, there may be fiber optic connection between the small cell and the macro eNodeB, and such backhaul link belongs to the ideal case, and the interface delay is usually less than 2.5us. Because the small cell may be deployed by home users or enterprise users themselves or with the operator's help, and it can be connected to the operator network via the IP backhaul (such as, via the xDSL, cable), for example small cell 3, small cell 4 and small cell 5, the backhaul link between the small cell and the macro eNodeB in this deployment scenario does not belong to the ideal case, and the interface delay can even reach to 60ms.

In addition, the small cell can also connect to the macro eNodeB with a wireless backhaul, such as the air interface wireless connection of relay node (RN). The RN provides the UE accessing to its cell with functions and services similar to the ordinary eNB, and it also accesses to an eNB (referred to as DeNB, donor evolved NodeB) serving for RN through a wireless interface in a manner similar to the ordinary UE, and the delay of such wireless backhaul link between the RN and the DeNB is usually 5-35ms, thus it has better performance compared with the wired manner (e.g., xDSL, cable) which uses the IP backhaul. But the RN can only establish a wireless air interface link with the DeNB through the cumbersome attach, certification and bearer establishment process, resulting in a large number of air interfaces and core network signaling overhead, and requiring a relatively long time for air interface establishment.

Hereinafter, in conjunction with the accompanying drawings and specific embodiments, the technical scheme of the present invention will be described in further detail, so that those skilled in the art can better understand and implement the present invention, but the cited embodiments are not intended to limit the present invention. It should be noted that, in the case of no conflict, embodiments and features in the embodiments in the present application may be combined with each other.

### The first embodiment

As shown in FIG. 2, the first embodiment of link establishment method according to the present invention comprises:
step 201: a first eNodeB and a second eNodeB establish a second link via a first link between the first eNodeB and the second eNodeB;
the first eNodeB and the second eNodeB acquire information that the peer party has the capability of establishing a second link according to the configuration information.

When both the first eNodeB and the second eNodeB currently have the capability of establishing the second link via the first link, the second link is established.

The step of the first eNodeB and the second eNodeB establishing the second link comprises but not limited to: the second eNodeB and the first eNodeB exchanging information for establishing the second link via the first link.

Preferably, the first link is a wired link, and the second link is a wireless link, and the first eNodeB and the second eNodeB exchange information via existing or newly-added messages of the X2 interface or the S1 interface of the wired link.

The second link is a wireless link, and the information for establishing the second link comprises at least one of the following items:
identification information assigned by the first eNodeB for identifying the second eNodeB in the second link;
security-related capability information supported by the first eNodeB and/or the second eNodeB and used for the second link;
a security-related mechanism or algorithm used for the second link;
parameters of the security-related mechanism or algorithm used for the second link;
wireless capability related information of the second eNodeB used for the second link.

The first eNodeB is a macro eNodeB. It should be noted that the macro eNodeB may also be replaced by a small cell, for example, the small cell is the group leader of a group of small cells (such as small cells 1-5 in FIG. 1), and may has a part of the management and control function. The second eNodeB is a small cell, comprising: a home evolved NodeB (HeNB), pico, remote radio unit (RRU), remote radio head (RRH), relay node (RN) and the like.

Understandably, the eNodeB which can assign identification information in the embodiment of the present invention is an eNodeB with the management function, for example, it can be a macro eNodeB, which manages a peer-end eNodeB communicating with it via the first link or the second link.

Step 202: the first eNodeB communicates with the second eNodeB via the first link and/or the second link.

In this case, there exist both the first link and the second link for communication between the second eNodeB and the first eNodeB, and the second eNodeB and the first eNodeB determine using the first link or the second link to transmit according to the attributes of the information to be transmitted, for example, the second eNodeB and the first eNodeB transmit the delay-sensitive information via the second link, and transmit the non-delay-sensitive information via the first link.

Alternatively, the second eNodeB and the first eNodeB determine using the first link or the second link to transmit in accordance with the load condition of the first link and/or the second link, in particular, the second eNodeB and the first eNodeB may simultaneously use the first link and the second link to communicate, or, the second eNodeB and the first eNodeB use the first link and the second link to communicate in the time division manner.

The one with less delay in the first and second links can be used for transmitting delay-sensitive information, and if the second link is a wireless link and its delay is less than the first link, then the first eNodeB communicating with the second eNodeB via the second link comprises transmitting the user plane delay-sensitive information as well as transmitting the control plane delay-sensitive information via the physical layer control information, the MAC layer control information or the RRC layer dedicated signaling.

### The second embodiment

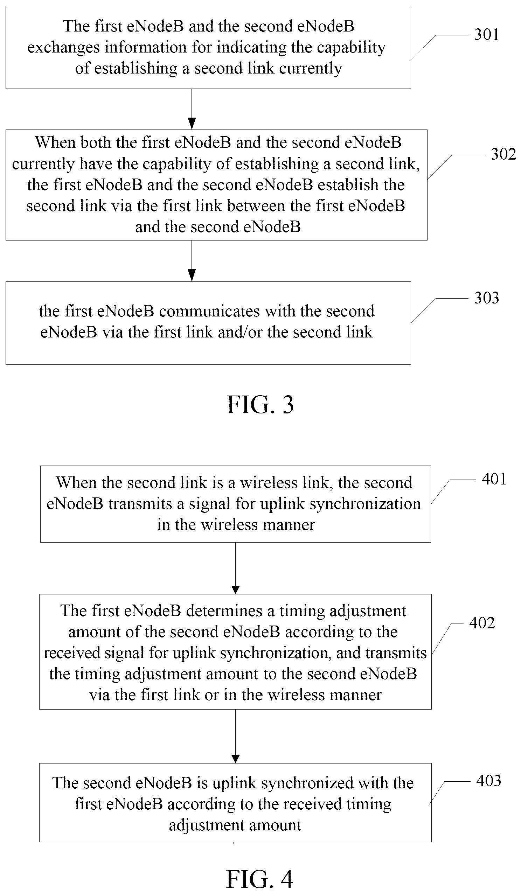

As shown in FIG. 3, the second embodiment of link establishment method according to the present invention comprises:
step 301: the first eNodeB and the second eNodeB exchange information for indicating the capability of establishing a second link currently;
   the information for indicating the capability of establishing a second link currently is used for pointing out whether the first or second eNodeB currently has the capability of establishing the second link via the first link or not.
   Preferably, the first link is a wired link, and the second link is a wireless link, and the first eNodeB exchanges the information for indicating the current link establishment capability with the second eNodeB via existing or newly-added messages of the X2 interface or the S1 interface of the wired link.
Step 302: when both the first eNodeB and the second eNodeB currently have the capability of establishing a second link, the first eNodeB and the second eNodeB establish the second link via the first link between the first eNodeB and the second eNodeB;

The step of the first eNodeB and the second eNodeB establishing the second link comprises:
the first eNodeB and the second eNodeB exchanging the information for establishing the second link via the first link;
and, the first eNodeB being uplink and/or downlink synchronized with the second eNodeB.

The second link is a wireless link, and the information for establishing the second link comprises at least one of the following items:
identification information assigned by the first eNodeB for identifying the second eNodeB in the second link;
security-related capability information supported by the first eNodeB and/or the second eNodeB and used for the second link;
a security-related mechanism or algorithm used for the second link;
parameters of the security-related mechanism or algorithm used for the second link;
wireless capability related information of the second eNodeB used for the second link.

The step of the first eNodeB and the second eNodeB establishing the second link comprises but not limited to: the first eNodeB being uplink and/or downlink synchronized with the second eNodeB.

Signals for downlink synchronization comprise at least one of the following: primary synchronization signal (PSS), secondary synchronization signal (SSS), and cell reference signal (CRS); signals for uplink synchronization comprise at least one of the following: primary synchronization signal (PSS), secondary synchronization signal (SSS), and cell reference signal (CRS); uplink signals for synchronization comprise at least one of the following:
sounding reference signal (SRS), demodulation reference signal (DMRS), and preamble.

As shown in FIG. 4, the step of the first eNodeB synchronizing the uplink signal with the second eNodeB comprises:
step 401: when the second link is a wireless link, the second eNodeB transmits a signal for uplink synchronization in the wireless manner;
   the second eNodeB uses a particular resource or selects a particular resource in a particular resource set for transmitting the uplink signal for synchronization to the first eNodeB; the particular resource or the particular resource set is transmitted to the second eNodeB by the first eNodeB through the broadcast or unicast messages of the first link or in the wireless manner.
Step 402: the first eNodeB determines a timing adjustment amount of the second eNodeB according to the received signal for uplink synchronization, and transmits the timing adjustment amount to the second eNodeB via the first link or in the wireless manner;
step 403: the second eNodeB is uplink synchronized with the first eNodeB according to the received timing adjustment amount.
Step 303: the first eNodeB communicates with the second eNodeB via the first link and/or the second link.

The first eNodeB communicating with the second eNodeB comprises transmitting user plane data as well as transmitting the delay-sensitive information of control plane data through the physical layer control information, the MAC control unit or the RRC dedicated information.

At this time, there simultaneously exist two communication links, that is, the first link and the second link, between the first eNodeB and the second eNodeB. The first eNodeB and the second eNodeB determine using the first link or the second link to transmit according to attributes of the information to be transmitted (mainly according to the sensitivity to delay) and/or the link load condition. The first eNodeB and the second eNodeB may also simultaneously use the first link and the second link to communicate.

Alternatively, in the abovementioned embodiment, the step of the first eNodeB and the second eNodeB establishing the second link may comprise: the second eNodeB exchanging the information for establishing the second link via the first link with the first eNodeB; and, the first eNodeB synchronizing the uplink and downlink signals with the second eNodeB.

In the abovementioned embodiment, the second eNodeB (such as the small cell) establishes, with the first eNodeB (such as the macro eNodeB), a second link with less delay (such as wireless backhaul link) via the first link between the second eNodeB and the first eNodeB, for delay-sensitive signaling or data interaction, thus saving air interface and core network signaling overhead. Meanwhile, it can improve the robustness of the communication between the small cell and the macro eNodeB, moreover the small cell or the macro eNodeB can distribute services according to the type of the service to be transmitted (mainly according to the sensitivity of service to the delay), to meet the service needs while maximally save the air interface link resources. For example, the interference coordination or load management or UE transmission point configuration related physical layer control information/MAC control unit/RRC dedicated signaling, or voice/video service data is delay-sensitive information; and the interface management related signaling or service data of file downloading type in the wireless backhaul link are non-delay-sensitive information. In addition, if the small cell or the macro eNodeB detects that the first link or the second link is overloaded, it can use another link for communication.

In the following, application examples are combined to describe the method of the present invention;
the technical solution provided in the embodiments of the present invention is applicable to the cellular communication system, and the communication system comprises at least an eNodeB, a user equipment (UE), and a mobile management entity (MME). The UE may be a cellular telephone, a cordless telephone, a Session Initiation Protocol (SIP) phone, a wireless local loop station (WLL), a personal digital assistants (PDA), a handheld device with wireless connectivity function, a computing device, or any other processing device connecting to a wireless modem. The eNodeB can be used to communicate with the wireless terminal and can also be called an access point, a Node B or other terms. A cellular communication can be carried out between the eNodeB and the wireless terminal, and the cellular communication may comprise GSM, CDMA, WCDMA, TD-SCDMA, UMTS, LTE, as well as other communications using the cellular network technologies.

In the following, in conjunction with the accompanying drawings and application examples, an implementation of the technical solution will be described in further detail.

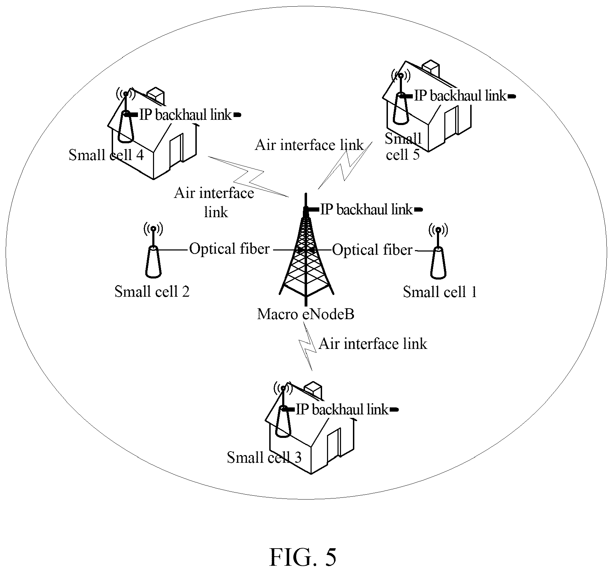

FIG. 5 is a schematic diagram of a scenario of the method according to the present invention. As shown in FIG. 2, in addition to the presence of IP backhaul link, there also exists an air interface link, that is, the second link in the method of the present invention, between the macro eNodeB and the small cells 3, 4 and 5. The air interface link and the IP backhaul link between macro eNodeB and the small cells 3, 4 and 5 may exist at the same time, and either the IP backhaul link or the air interface link can be selected for transmission according to the load condition or the service needs.

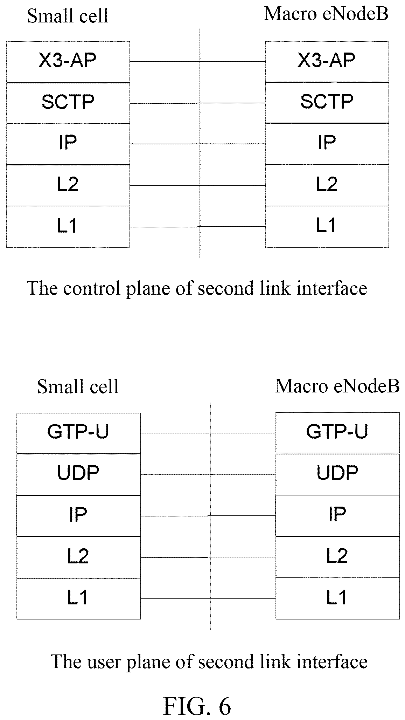

FIG. 6 is a schematic diagram of an example of the protocol stack of the second link interface between the small cell and the macro eNodeB carrying the user plane data as well as control plane signaling of UE served by the small cell according to the method of the present invention. As shown in FIG. 6, the control plane signaling transport layer of UE uses the SCTP protocol to ensure a reliable transmission of the second link interface signaling. Wherein the X3-AP protocol is an application layer protocol for the second link interface carrying the UE control plane signaling and is used for processing and generating the second link interface signaling. Furthermore, the application layer for the second link interface carrying the UE control plane signaling may also use the X2-AP protocol used by the X2 interface between the LTE eNodeBs. The transport layer for the second link interface carrying the UE user plane data uses the UDP protocol, so that the user plane data can be effectively transmitted. The application layer for the second link interface carrying the UE user plane data uses the GTP-U protocol. From the above description, it can be seen that the second link interface carrying UE user plane data protocol stack is the same as the S1-U interface between the LTE eNodeB and the SGW as well as the X2-U interface between the eNodeBs. In addition, the protocol stack of second link interface may only have the physical layer, then the macro eNodeB and the small cell can interact through the physical layer control information; or, the protocol stack of second link interface may only have the physical layer and the layer 2 (including MAC, RLC, PDCP, or only the MAC layer, or only the MAC layer and the RLC layer), then the macro eNodeB and the small cell can interact through the physical layer control information or the MAC control information; in addition, there exist air interfaces (including the physical layer, the MAC/RLC/PDCP layer, the RRC layer) between the macro eNodeB and the small cell for exchanging the control information related to the small cell.

### The first application example

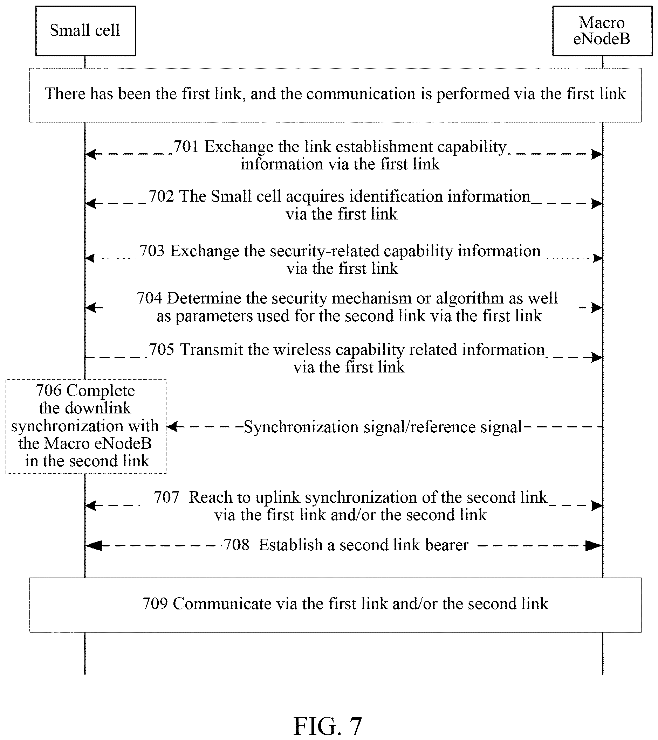

This embodiment describes the method in which the small cell and the macro eNodeB establish a second link via a first link, and FIG. 7 is a schematic diagram of a process of the method described in the present embodiment. As shown in FIG. 5, the method of the present embodiment comprises the following steps:
step 701: the small cell and the macro eNodeB exchange information for indicating the capability of establishing a second link currently;
the information indicating the capability of establishing a second link currently may only be the link establishment capability information, in this case, the small cell or the macro eNodeB does not have the function of enabling or disabling the link establishment capability; accordingly, if the small cell or the macro station has the function of enabling or disabling the link establishment capability, it indicates that the information indicating the capability of establishing a second link currently needs to comprise the link capability information as well as indication information of enabling or disabling the current link capability.

Of course, the information indicating the capability of establishing the second link currently is not limited to the abovementioned method, and the default setting method can also be used.

The small cell and the macro eNodeB have already had the first link and they can communicate via the first link. Alternatively, the small cell and the macro eNodeB exchange the information for indicating capability of establishing the second link currently via the first link, which is used for indicating whether the eNodeB has the capability of establishing the second link via the first link or not. In the present embodiment, the first link is a wired link, such as a wired backhaul link based on DSL or cable; the second link is a wireless air interface link.

In the present application example, both the small cell and the macro eNodeB have the capability of establishing the second link via the first link. The small cell and the macro eNodeB exchange the link establishment capability information through X2-interface or SI-interface messages based on the wired link, such as through the following existing X2-interface messages: X2 establishment request message, X2 establishment response message, X2 eNodeB configuration update message, and X2 eNodeB configuration update confirmation message, or through the following newly-added X2-interface messages: X2 link establishment capability request message, X2 link establishment capability response message, X2 link establishment capability confirmation message; such as, through the following existing SI-interface messages: eNodeB configuration transmission message and MME configuration transmission message, or through the following newly-added SI-interface messages: S1 link establishment capability request message, S1 link establishment capability response message, S1 link establishment capability confirmation message.

Alternatively, the macro eNodeB may also transmit its indication information of enabling the link establishment capability to the small cell, and the indication information of enabling the link establishment capability is used for indicating whether the link establishment capability of the macro eNodeB is enabled or not. The macro eNodeB may set its indication information of enabling the link establishment capability according to the OAM configuration or its own air interface load condition. For example, if the air interface load of the macro eNodeB is relatively heavy, its indication information of enabling the link establishment capability can be set as disabled. The small cell needs to select a macro eNodeB with the link establishment capability and the function being enabled, and the small cell and the macro eNodeB establish the second link via the first link.

Step 702: this step is optional, and the small cell may acquire via the first link the identification information assigned by the macro eNodeB to it;
the identification information is used for identifying the small cell in the second link. The identification information is a cell radio network temporary identity (C-RNTI). The small cell can acquire the identification information through X2-interface or SI-interface messages based on the wired link.

Step 703: this step is optional, and the small cell and the macro eNodeB exchange the security-related capability information via the first link ;

The security-related capability information refers to a security-related mechanism or algorithm supported by the small cell or the macro eNodeB and used for the second link. The small cell and the macro eNodeB exchange the security-related capability information via the X2-interface or S1-interface messages based on the wired link.

Step 704: this step is optional, and the small cell and the macro eNodeB determine via the first link the security mechanism or algorithm used for the second link, as well as parameters used in the security mechanism or algorithm;

The small cell and the macro eNodeB acquire the security-related capability supported by the peer-end eNodeB through the exchanging of security-related capability information, and then determine the security mechanism or algorithm used for the second link. Alternatively, the security-related mechanism or algorithm used for the second link is the network layer based IPsec security protocol, including authentication, integrity protection, encryption and other protocols. Alternatively, the parameters of the security mechanism or algorithm comprise a security key and a certificate.

Step 705: this step is optional, and the small cell transmits via the first link its wireless capability related information to the macro eNodeB;
wherein, the wireless capability related information may comprise: AS version information, PDCP related parameters, physical layer related parameters, radio frequency related parameters, measurement related parameters, feature group indicator (referred to as FGI), self-organizing network-related parameters, FDD/TDD comprehensive capability information, and other capability information. The macro eNodeB can manage and configure the communication in the second link according to the wireless capability related information of the small cell.

It should be noted that the timing order of steps 701 to 705 can be in any combination or interchangeable.

Step 706: this step is optional, and the small cell and the macro eNodeB are downlink synchronized in the second link;
the small cell can be downlink synchronized with the macro eNodeB by using the method of detecting the macro eNodeB's synchronization signal (such as primary synchronization sequence (PSS), secondary synchronization sequence (SSS)) and/or reference signal (such as cell reference signal (CRS)). Alternatively, the second link between the small cell and the macro eNodeB is an uplink unidirectional link, and the small cell does not need to be downlink synchronized with the macro eNodeB.

Alternatively, after being downlink synchronized with the macro eNodeB, the small cell measures the macro eNodeB accordingly. The small cell can perform a measurement based on the CRS of the macro eNodeB. Then, the small cell can transmit the measurement result via the first link to the macro eNodeB, and the macro eNodeB judges whether to establish a second link with the small cell or not according to the measurement result.

Step 707: this step is optional, and the small cell and the macro eNodeB are uplink synchronized in the second link;

After the small cell transmits the signal for uplink synchronization to the macro eNodeB, the macro eNodeB calculates an uplink timing adjustment amount according to the signal and transmits it to the small cell.

Wherein, the small cell transmits the signal for uplink synchronization in the second link. The macro eNodeB may transmit the uplink timing adjustment amount in the first link or the second link. Alternatively, the macro eNodeB may transmit the particular resource or resource set used by the signal for uplink synchronization to the small cell. The macro eNodeB may transmit the particular resource or resource set via the first link or the second link. Wherein, the resource or resource set comprises the time domain and/frequency domain and/or code domain. If the macro eNodeB transmits the particular resource for transmitting the signal for uplink synchronization to the small cell, the small cell uses the particular resource to transmit the signal for uplink synchronization; if the macro eNodeB transmits the particular resource set for transmitting the signal for uplink synchronization to the small cell, the small cell selects any resource from the resource set for transmitting the signal for uplink synchronization; wherein the signal for uplink synchronization can be a sounding reference signal (SRS), a demodulation reference signal (DMRS), or a preamble. Alternatively, the second link between the small cell and the macro eNodeB is a downlink unidirectional link, and the small cell does not need to be uplink synchronized with the macro eNodeB.

Step 708: this step is optional, and the macro eNodeB establishes a second link air interface bearer for the small cell;
Alternatively, the small cell transmits a bearer establishment request to the macro eNodeB via the first link, wherein the request may comprise information of parameters, such as the Qos parameter, of the bearer to be established. The macro eNodeB may carry out the admission control based on the bearer parameter information requested by the small cell and its own load condition. Alternatively, the macro eNodeB can also establish a corresponding second link interface bearer for the small cell according to the service statistics information. Alternatively, the bearer establishment request may be transmitted via the first link. Alternatively, the macro eNodeB can establish a corresponding second link bearer for the small cell via the first link or the second link. Before the macro eNodeB establishes the corresponding second link bearer for the small cell via the second link, the small cell needs to complete the downlink synchronization of the second link with the macro eNodeB.

It should be noted that the step 708 might also be performed before step 706 and/or 707.

The aforementioned step 702 to step 708 are the process of the small cell and the macro eNodeB establishing the second link via the first link between them.

Step 709: the small cell communicates with the macro eNodeB via the first link and/or the second link.

There may exist two communication links simultaneously, that is, the first link (wired IP backhaul link) and the second link (wireless air interface backhaul link), between the small cell and the macro eNodeB. The small cell and the macro eNodeB can determine using the wired IP backhaul or the wireless air interface backhaul link to transmit according to attributes of the information to be transmitted (mainly according to its sensitivity to the delay) and/or the link load condition. And the small cell and the macro eNodeB may simultaneously use the wired IP backhaul link and the wireless air interface backhaul link to communicate.

Typically, the wireless air interface backhaul link has less delay compared with the wired IP backhaul link and can be used to transmit delay-sensitive control signaling/information or data. And the wired IP backhaul link may be used to transmit non-delay-sensitive control signaling or user plane data, to meet the service needs and maximally save the air interface link resources. For example, the small cell and the macro eNodeB can transmit, via the wireless air interface backhaul link, the related physical layer control information/MAC control information/RRC dedicated signaling used for interference coordination or load management or UE transmission point configuration, or the delay-sensitive user plane data; and the interface management related signaling or the non-delay-sensitive user plane data can be borne via the wired IP backhaul link.

In addition, after the second link between the macro eNodeB and the small cell is established, the macro eNodeB can also deactivate the second link in accordance with the OAM configuration or its own load condition. For example, if the air interface load of an ordinary UE served by the macro eNodeB is heavy, the second link between the macro eNodeB and the small cell can be deactivated. The macro eNodeB may transmit the physical layer control information/MAC control unit/RRC dedicated signaling to perform the deactivation of second link via the second link. The macro eNodeB can also perform the deactivation of second link through the X2/S1 interface signaling of the first link. After the small cell receives the deactivation signaling of second link, it needs to release the second link and release the link related contexts, such as the identification information assigned by the macro eNodeB to the small cell. On the other hand, the macro eNodeB may also re-activate the second link according to the OAM configuration or its own load condition. For example, if the air interface load of the ordinary UE served by the macro eNodeB is relatively light, the second link between the macro eNodeB and the small cell can be reactivated. The macro eNodeB can re-activate the second link through the X2/S1 interface signaling of the first link. After receiving the re-activation signaling, the small cell can re-execute the process of establishing the second link with the macro eNodeB.

### The second application example

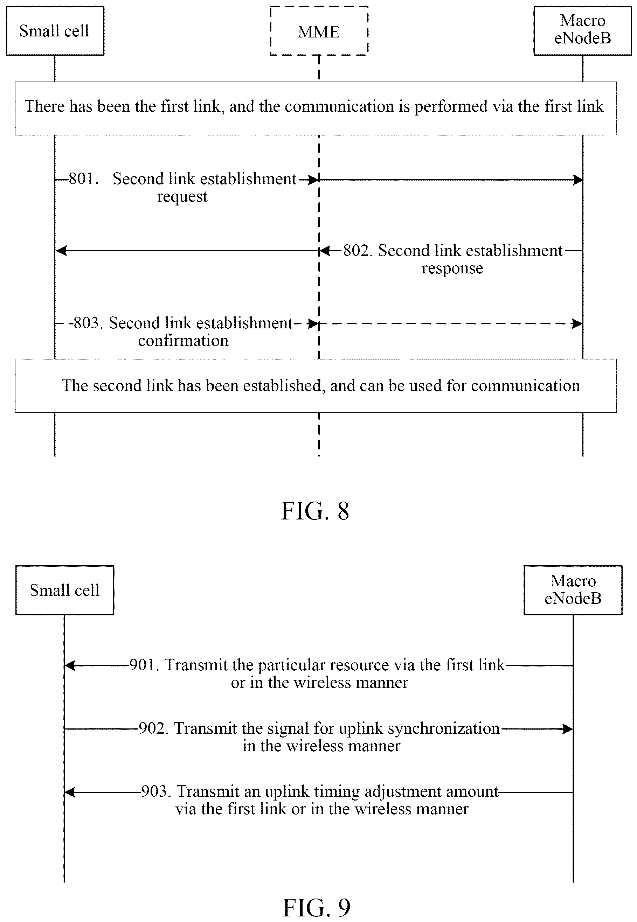

The following description is the method for establishing the second link between the small cell and the macro eNodeB, and as shown in FIG. 8, the small cell and the macro eNodeB have already had the first link between them and can communicate via the first link, and the method comprises the following steps:
step 801: the small cell transmits a second link establishment request to the macro eNodeB via the first link;

In the present embodiment, the first link is a wired link, such as, a wired backhaul link based on DSL or cable; the second link is a wireless air interface link.

The small cell can transmit a second link establishment request through the X2 interface or S1 interface messages based on the wired link, such as, through the following existing X2 interface messages: X2 establishment request message, X2 eNodeB configuration update message, or through the following newly-added X2 interface message: X2 link establishment request message; such as, through the following existing S1 interface message: eNodeB configuration transmission message, or through the following newly-added S1 interface message: S1 link establishment request message. Alternatively, the second link establishment request carried in the X2 interface or S1 interface message may comprise the wireless capability related information and/or the security-related capability information of the small cell used for the second link. Alternatively, the second link establishment request carried in the X2 interface or S1 interface message may also comprise the second link establishment request indication information. Wherein, the security-related capability information indicates the security mechanism or algorithm used for the second link and supported by the small cell. Wherein, the wireless capability related information may comprise: AS version information, PDCP related parameters, physical layer related parameters, radio frequency related parameters, measurement related parameters, feature group indicator (referred to as FGI), self-organizing network-related parameters, FDD/TDD comprehensive capability information, and other capability information. Alternatively, the small cell carries parameter information, such as the Qos parameter, of the bearer to be established in the second link establishment request. If there exists the X2 interface between the small cell and the macro eNodeB, the second link establishment request is transmitted via the X2 interface message; if there is no the X2 interface but only the S1 interface between the small cell and the macro eNodeB, then the second link establishment request is transmitted via the S1 interface message, and the S1 interface message needs to be forwarded via the MME.

Step 802: the macro eNodeB transmits a second link establishment response to the macro eNodeB via the first link;

For example, the following existing X2 interface messages: X2 establishment response message and X2 eNodeB configuration update confirmation message can be used, and also the following newly-added X2 interface message: X2 link establishment response message can be used. For example, the following existing S1 interface message: eNodeB configuration transmission message can be used, and also the following newly-added S1 interface message: S1 link establishment response message can be used. Alternatively, the second link establishment response carried in the X2 interface or S1 interface message may comprise security-related capability information of the macro eNodeB used for the second link, or the security-related mechanism or algorithm and parameters determined by the macro eNodeB for the second link. Alternatively, the second link establishment response may also comprise identification information assigned by the macro eNodeB to the small cell and used for the second link, for example, the identification information may be the cell radio network temporary identity (C-RNTI). Wherein, the security-related capability information indicates the security mechanism or algorithm supported by the macro eNodeB and used for the second link. Alternatively, the security-related mechanism or algorithm determined by the macro eNodeB and used for the second link is based on the network layer IPsec security protocol, including authentication, integrity protection, encryption and other protocols. Alternatively, the parameters for the security mechanism or algorithm comprise a security key and a certificate. Alternatively, if the macro eNodeB receives the parameter information of the bearer to be established in the second link establishment request transmitted by the small cell, then it performs the admission control based on the information, and establishes the corresponding second link interface bearer through the second link establishment response according to the result of admission control. Alternatively, the macro eNodeB can also establish the corresponding second link interface bearer for the small cell according to the service statistics information. If there exists the X2 interface between the small cell and the macro eNodeB, the second link establishment response is transmitted via the X2 interface message; if there is no X2 interface but only the S1 interface between the small cell and the macro eNodeB, the second link establishment response is transmitted via the S1 interface message, and the S1 interface message needs to be forwarded via the MME.

Step 803: this step is optional, and the small cell transmits a second link establishment confirmation to the macro eNodeB via the first link;

For example, the following existing X2 interface message: X2 eNodeB configuration update confirmation message can be used, and also the following newly-added X2 interface message: X2 link establishment confirmation message can be used. For example, the following existing S1 interface message: eNodeB configuration transmission message can be used, and also the following newly-added S1 interface message: S1 link establishment confirmation message can be used. Alternatively, the second link establishment request carried in the X2 interface or S1 interface message may comprise the security-related mechanism or algorithm as well as parameters determined by the small cell and used for the second link. If there exists the X2 interface between the small cell and the macro eNodeB, the second link establishment confirmation is transmitted via the X2 interface message; if there is no X2 interface but only the S1 interface between the small cell and the macro eNodeB, the second link establishment confirmation is transmitted via the S1 interface message, and the S1 interface message needs to be forwarded via the MME.

At this time, the second link has been established, and the small cell and the macro eNodeB can communicate via the second link. There may exist two communication links, that is, a first link (wired IP backhaul link) and a second link (wireless air interface backhaul link), between the small cell and the macro eNodeB at the same time. The small cell and the macro eNodeBs can determine using the wired IP backhaul link or the wireless air interface backhaul link to transmit according to the attributes (mainly according to the sensitivity to delay) of the information to be transmitted and/or the link load condition. And the small cell and the macro eNodeB can simultaneously use the wired IP backhaul link and the wireless air interface backhaul link to communicate.

Typically, the wireless air interface backhaul link has less delay compared with the wired IP backhaul link and can be used to transmit the delay-sensitive control signaling/information or data. And the wired IP backhaul link may be used to transmit the non-delay-sensitive control signaling or user plane data, to meet the service needs and maximally save the air interface link resources. For example, the small cell and the macro eNodeB can transmit the related physical layer control information/MAC control unit/RRC dedicated signaling for the interference coordination or the load management or the UE transmission point configuration through the wireless air interface backhaul link, or transmit the delay-sensitive user plane data; and the interface management related signaling or the non-delay-sensitive user plane data can be carried through the wired IP backhaul link.

It should be noted that the small cell also needs to be downlink and uplink synchronized with the macro eNodeB before the small cell and the macro eNodeB communicate via the second link.

In the following, the process of the small cell performing the uplink synchronization of the second link with the macro eNodeB will be illustrated in combination with the accompanying drawings. As shown in FIG. 9, it comprises the following steps:
step 901: the macro eNodeB transmits the particular resource for the small cell transmitting the signal for uplink synchronization to the small cell;
   the macro eNodeB may transmit the particular resource via the first link or in the wireless manner. Wherein, the resource comprises time domain and/frequency domain and/or code domain. Alternatively, the particular resource may be included in the second link establishment response. In the case that the macro eNodeB transmits the particular resource in the wireless manner, the particular resource can be transmitted through the RRC dedicated signaling, MAC cells, or PHY control information, and addressed according to the C-RNTI assigned by the macro eNodeB to the small cell. In this way, the macro eNodeB has transmitted the C-RNTI, assigned for the small cell, to the small cell via the first link before this step.
Step 902: the small cell transmits the signal for uplink synchronization via the wireless application layer (that is, the wireless manner);
   wherein, the signal for uplink synchronization may be a sounding reference signal (SRS), or a demodulation reference signal (DMRS), or a preamble;
step 903: after receiving the signal for uplink synchronization transmitted by the small cell, the macro eNodeB calculates an uplink timing adjustment amount, and transmits the uplink timing adjustment amount to the small cell via the first link or in the wireless manner.

In the case that the macro eNodeB transmits the uplink timing adjustment amount in the wireless manner, it can be transmitted via the RRC dedicated signaling, the MAC cell, and the PHY control information, and addressed via the RA-RNTI or the C-RNTI assigned by the macro eNodeB to the small cell.

After receiving the uplink timing adjustment amount, the small cell is uplink synchronized with the macro eNodeB in the second link according to the received uplink timing adjustment amount.

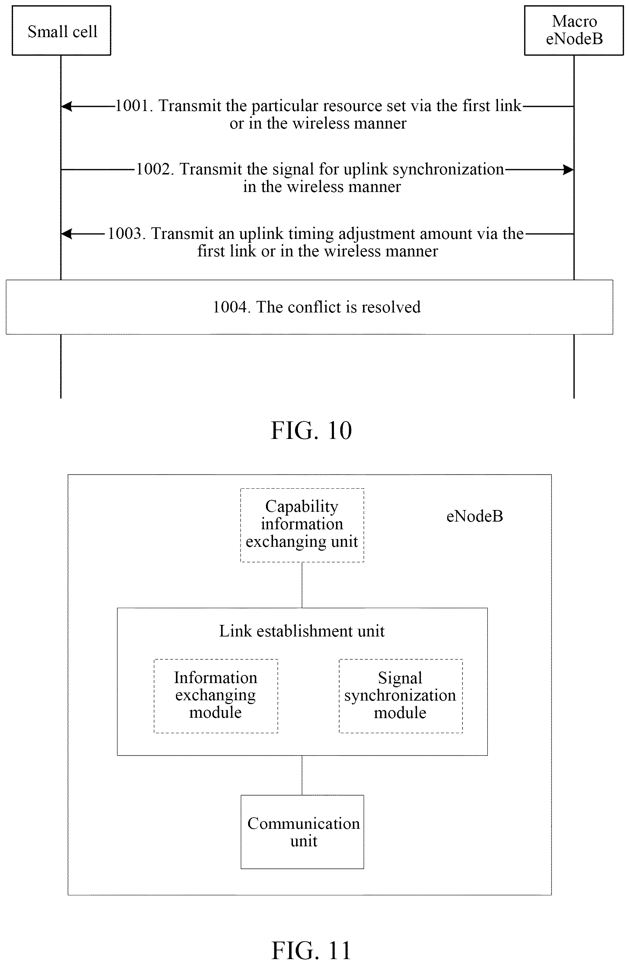

The following description is another method for the small cell and the macro eNodeB being uplink synchronized in the second link, and as shown in FIG. 10, the method comprises the following steps:
step 1001: the macro eNodeB transmits a particular resource set for the small cell transmitting the signal for uplink synchronization to the small cell;
   The macro eNodeB may transmit the particular resource set via the first link or in the wireless manner. Wherein, the resource set comprises time domain and/frequency domain and/or code domain. Alternatively, the particular resource set may be included in the second link establishment response. In the case that the macro eNodeB transmits the particular resource set in the wireless manner, it can be transmitted through the system message, the RRC dedicated signaling, the MAC cell and the PHY control information, and addressed via the SI-RNTI or the C-RNTI assigned by the macro eNodeB to the small cell.
Step 1002: the small cell selects any resource from the particular resource set transmitted by the macro eNodeB to transmit the signal for uplink synchronization in the wireless manner;
   Wherein, the signal for uplink synchronization may be a sounding reference signal (SRS), a demodulation reference signal (DMRS), or a preamble.
Step 1003: after receiving the signal for uplink synchronization transmitted by the small cell, the macro eNodeB calculates an uplink timing adjustment amount and transmits the uplink timing adjustment amount to the small cell via the first link or in the wireless manner;
   in the case that the macro eNodeB transmits the uplink timing adjustment amount via the second link, it can be transmitted via the RRC dedicated signaling, the MAC cell, and the PHY control information. If the macro eNodeB has not assigned C-RNTI to the small cell yet, the temporary C-RNTI assigned to the small cell can be transmitted to the small cell in this step.
Step 1004: the conflict is resolved.

Since the small cell selects any resource for transmitting the signal for uplink synchronization from the particular resource set, it may select the same resource as the UEs in other macro eNodeBs or other small cells, that is, a conflict is produced. In this way, it also needs a conflict resolution mechanism. The conflict resolution mechanism is similar to the conflict resolution mechanism in the existing contention-based random access process of the UE.

After the conflict is resolved successfully, the small cell is uplink synchronized with the macro eNodeB in the second link according to the received uplink timing adjustment amount.

In order to achieve the abovementioned method embodiment, the present invention further provides an eNodeB, as shown in FIG. 11, the eNodeB comprises:
a link establishment unit, used for establishing a second link with a peer-end eNodeB to which it communicates via the first link;
a communication unit, used for communicating with the peer-end eNodeB via the first link and/or the second link.

To illustrate the difference, in the embodiment of the present eNodeB, the eNodeB with which the present eNodeB communicates via the first link and/or the second link is called the peer-end eNodeB.

Alternatively, the eNodeB further comprises a capability information exchanging unit, used for, before establishing the second link between it and the peer-end eNodeB, exchanging with the peer-end eNodeB the information for indicating the capability of establishing the second link currently, when both the eNodeB and the peer-end eNodeB currently have the capability of establishing the second current link, the link establishment unit establishes the second link.

As shown in FIG. 11, alternatively, the link establishment unit comprises:
an information exchanging module, used for exchanging via the first link with the peer-end eNodeB the information for establishing the second link; and/or
a signal synchronization module, used for synchronizing uplink and downlink signals with the peer-end eNodeB.

In particular, the first link is a wired link, and the capability information exchanging unit or the information exchanging module of the eNodeB exchanges information via the existing or newly-added X2 interface or S1 interface messages of the wired link.

The second link is a wireless link, and the information for establishing the second link comprises at least one of the following items:
identification information assigned by the eNodeB for identifying the peer-end eNodeB in the second link;
security-related capability information supported by the eNodeB and used for the second link;
security-related mechanism or algorithm used for the second link;
parameters of the security-related mechanism or algorithm used for the second link;
wireless capability related information of the peer-end eNodeB and used for the second link.

As described above, downlink signals for synchronization comprise at least one of the following: primary synchronization signal (PSS), secondary synchronization signal (SSS), and cell reference signal (CRS); and uplink signals for synchronization comprise at least one of the following:
sounding reference signal (SRS); demodulation reference signal (DMRS); and preamble.

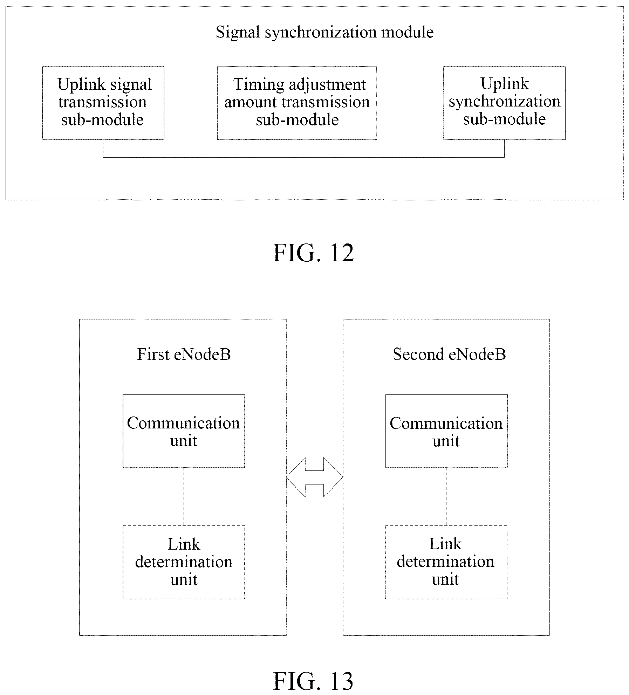

As shown in FIG. 12, the signal synchronization module comprises:
an uplink signal transmission sub-module, used for transmitting, via the first link or in the wireless manner, the uplink signal for synchronization to the peer-end eNodeB communicating with the eNodeB via the first link;
a timing adjustment amount transmission sub-module, used for determining a timing adjustment amount according to the received uplink signal for synchronization, and transmitting, via the first link or in the wireless manner, the timing adjustment amount to the peer-end eNodeB communicating with the eNodeB via the first link;
an uplink synchronization sub-module, used for being uplink synchronized with the peer-end eNodeB communicating with the eNodeB via the first link according to the timing adjustment amount.

Understandably, regarding a pair of managing and managed eNodeBs, the function of timing adjustment transmission sub-module is achieved in the eNodeB with the management function, and the functions of the uplink signal transmission sub-module and the uplink synchronization sub-module are achieved in the managed eNodeB, but in general, one eNodeB may be either the managing party or the managed party, therefore, the functions of the abovementioned three sub-modules may be realized in one eNodeB.

The uplink signal transmission sub-module uses the particular resource or selects a particular resource from the particular resource set for transmitting the uplink signal for synchronization; the signal synchronization module further comprises a resource information transmission module for transmitting the particular resource or the specific resource set via the broadcast or unicast messages in the first link or in the wireless manner.

The communication unit transmits the user plane delay sensitive information via the second link as well as transmits control plane delay sensitive information through the physical layer control information, the MAC layer control information or the RRC dedicated signaling.

In order to achieve the abovementioned method, the present invention further provides a communication system, and as shown in FIG. 13, the communication system comprises a first eNodeB and a second eNodeB, and there exist a first link and a second link for communication between the first eNodeB and the second eNodeB, and the first and second eNodeBs comprise:
a communication unit, used for communicating with the first eNodeB or the second eNodeB via the first link and/or the second link.

The first eNodeB and the second eNodeB further comprise:
a link determination unit, used for determining the link used by the communication unit for communication according to attributes of the information to be transmitted or the link load condition.

When the information to be transmitted is non-delay-sensitive information, the link determination unit determines that the link used for communication is the first link; when the information to be transmitted is the delay sensitive information, the link determination unit determines that the link used for communication is the second link.

Preferably, the first link is a wired link, and the second link is a wireless link.

The communication unit simultaneously uses the first link and the second link to communicate or uses the first link and the second link to communicate in the time division manner.

It should be noted that the abovementioned embodiments are used to illustrate rather than limit the present invention, and those skilled in the art can design alternative embodiments without departing from the scope of appended claims. Various component embodiments of the present invention may be implemented as hardware, or software modules running in one or more processors, or as a combination thereof. Those skilled in the art should understand that a microprocessor or a digital signal processor (DSP) might be used in practice to achieve some or all of the functions of some or all components of the device in accordance with the embodiments of the present invention. The present invention may also implement devices or device programs (such as computer programs and computer program products) for performing some or all of the method described herein. Such programs implementing the present invention may be stored in a computer readable media, or may have the form of one or more signals. Such signals can be downloaded from an Internet website, or provided on carrier signals or in any other form.

Those skilled in the art can understand that modules in the device of the embodiment can be adaptively changed and provided in one or more devices different from the embodiment. Modules, units or components in the embodiments can be combined into one module, unit or component, and in addition, they can be divided into a plurality of sub-modules, sub-units or sub-components. Except that at least some of such features and/or processes or units are mutually exclusive, any combination thereof can be used to combine all the features disclosed in the present specification (including the appended claims, abstract and accompanying drawings), as well as all processes or units of the disclosed method or device.

### Industrial Applicability

Compared with the related art, the link establishment method, eNodeB and communication system in accordance with the embodiments of the present invention establish a second link between two eNodeBs via an existing first link, so that the two eNodeBs can communicate via the first link and/or the second link, and then using the first link or the second link is determined to transmit according to attributes (mainly according to the sensitivity to delay) of the information to be transmitted and/or the link load condition, so as to meet service needs and maximally save air interface link resources.

## Claims

1. A method for establishing a link, wherein the method comprises:
a first eNodeB and a second eNodeB establishing a second link via a first link between the first eNodeB and the second eNodeB;
the first eNodeB and the second eNodeB communicating via the first link and/or the second link; wherein in this step, the first eNodeB and the second eNodeB determine using the first link or the second link to transmit according to attributes of information to be transmitted and/or link load condition;
wherein the step of the first eNodeB and the second eNodeB establishing the second link comprises: the first eNodeB exchanging via the first link information for establishing the second link with the second eNodeB; and/or, the first eNodeB being uplink and/or downlink synchronized with the second eNodeB.

2. The method of claim 1, wherein before the first eNodeB and the second eNodeB establish the second link, the first eNodeB and the second eNodeB exchange information for indicating a capability of establishing the second link currently, and when both the first eNodeB and the second eNodeB currently have the capability of establishing the second link via the first link, the second link is established.

3. The method of claim 1, wherein the first link is a wired link, and the first eNodeB and the second eNodeB exchange information through existing or newly-added messages of X2 interface or S1 interface of the wired link.

4. The method of claim 1, wherein the second link is a wireless link, and the information for establishing the second link comprises at least one of following items:
identification information assigned by the first eNodeB for identifying the second eNodeB in the second link;
security-related capability information supported by the first eNodeB and/or the second eNodeB and used for the second link;
a security-related mechanism or algorithm used for the second link;
parameters of the security-related mechanism or algorithm used for the second link;
wireless capability related information of the second eNodeB used for the second link;
or
wherein signals for downlink synchronization comprise at least one of the following: primary synchronization signal (PSS), secondary synchronization signal (SSS), and cell reference signal (CRS); signals for uplink synchronization comprise at least one of the following:
sounding reference signal (SRS), demodulation reference signal (DMRS) and preamble;
or
wherein the step of the first eNodeB being uplink synchronized with the second eNodeB comprises:
when the second link is a wireless link, the second eNodeB transmitting a signal for uplink synchronization in a wireless manner;
the first eNodeB determining a timing adjustment amount of the first eNodeB according to the received signal for uplink synchronization, and transmitting the timing adjustment amount to the second eNodeB via the first link or in the wireless manner;
the second eNodeB being uplink synchronized with the first eNodeB according to the received timing adjustment amount,
preferably, the second eNodeB uses a particular resource or selects a particular resource in a particular resource set to transmit the signal for uplink synchronization;
wherein the particular resource or the particular resource set is transmitted by the first eNodeB to the second eNodeB via the first link or in the wireless manner.

5. The method of claim 1, wherein the second link is a wireless link, the first eNodeB communicating with the second eNodeB via the second link comprises transmitting user-plane delay sensitive information as well as transmitting control plane delay sensitive information through physical layer control information, MAC layer control information or a RRC layer dedicated signaling.

6. An eNodeB, comprising:
a link establishment unit, configured to: establish a second link with a peer-end eNodeB communicating with the eNodeB via a first link; a communication unit, configured to: communicate with the peer-end eNodeB via the first link and/or the second link;
wherein the communication unit is further configured to determine using the first link or the second link to transmit according to attributes of information to be transmitted and/or link load condition;
wherein the link establishment unit comprises:
an information exchanging module, configured to, exchange via the first link information for establishing the second link with the peer-end eNodeB; and/or
a signal synchronization module, configured to, synchronize uplink and downlink signals with the peer-end eNodeB.

7. The eNodeB of claim 6, wherein the eNodeB further comprises a capability information exchanging unit, configured to, before establishing the second link between the eNodeB and the peer-end eNodeB, exchange information for indicating a capability of establishing the second link currently with the peer-end eNodeB, and when both the eNodeB and the peer-end eNodeB currently have the capability of establishing the second link, the link establishment unit establishes the second link.

8. The eNodeB of claim 7, wherein the first link is a wired link, and the capability information exchanging unit or the information exchanging module of the eNodeB exchange information via existing or newly-added messages of X2 interface or S1 interface of the wired link.

9. The eNodeB of claim 7, wherein the second link is a wireless link, and the information for establishing the second link comprises at least one of following items:
identification information assigned by the eNodeB for identifying the peer-end eNodeB in the second link;
security-related capability information supported by the eNodeB and used for the second link;
a security-related mechanism or algorithm used for the second link;
parameters of the security-related mechanism or algorithm used for the second link;
wireless capability related information of the peer-end eNodeB used for the second link;
or
wherein downlink signals for synchronization comprise at least one of the following: primary synchronization signal (PSS), secondary synchronization signal (SSS), and cell reference signal (CRS); and uplink signals for synchronization comprise at least one of the following:
sounding reference signal (SRS); demodulation reference signal (DMRS); and preamble;
or
wherein the signal synchronization module comprises:
an uplink signal transmission sub-module, configured to, transmit, via the first link or in a wireless manner, an uplink signal for synchronization to the peer-end eNodeB communicating with the eNodeB via the first link;
a timing adjustment amount transmission sub-module, configured to, determine a timing adjustment amount according to a received uplink signal for synchronization, and transmit, via the first link or in the wireless manner, the timing adjustment amount to the peer-end eNodeB communicating with the eNodeB via the first link;
an uplink synchronization sub-module, configured to, be uplink synchronized with the peer-end eNodeB communicating with the eNodeB via the first link according to the timing adjustment amount.
preferably, the uplink signal transmission sub-module uses a particular resource or selects a particular resource from a particular resource set for transmitting the uplink signal for synchronization; the signal synchronization module further comprises a resource information transmission module, configured to transmit the particular resource or the particular resource set via broadcast or unicast messages in the first link or in the wireless manner.

10. The eNodeB of claim 6, wherein the communication unit transmits user plane delay sensitive information via the second link as well as transmits control plane delay sensitive information through physical layer control information, MAC layer control information or a RRC layer dedicated signaling.

11. A communication system, comprising a first eNodeB and a second eNodeB, wherein there exist a first link and a second link for communication between the first eNodeB and the second eNodeB, and the first eNodeB and the second eNodeB comprise: a communication unit, configured to: communicate with the first eNodeB or the second eNodeB via the first link and/or the second link,
wherein the first eNodeB and the second eNodeB are configured to determine using the first link or the second link to transmit according to attributes of information to be transmitted and/or link load condition;
wherein the first eNodeB exchanges via the first link information for establishing the second link with the second eNodeB, and/or, the first eNodeB is uplink and/or downlink synchronized with the second eNodeB.

12. The communication system of claim 11, wherein the first eNodeB and the second eNodeB further comprise: a link determination unit, configured to: determine a link which the communication unit uses for communication according to attributes of information to be transmitted or a link load condition;
or
wherein the link determination unit is configured to: when information to be transmitted is non-delay-sensitive information, determine that a link for communication is the first link; when the information to be transmitted is delay-sensitive information, determine that the link for communication is the second link, preferably, the first link is a wired link, and the second link is a wireless link.

13. The communication system of claim 11, wherein the communication unit is configured to: simultaneously use the first link and the second link to communicate or use the first link and the second link to communicate in a time division manner.

## Patentansprüche

1. Verfahren zum Aufbau einer Verbindung, wobei das Verfahren umfasst:
einen ersten eNodeB und einen zweiten eNodeB, die eine zweite Verbindung über eine erste Verbindung zwischen dem ersten eNodeB und dem zweiten eNodeB aufbauen;
wobei der erste eNodeB und der zweite eNodeB über die erste Verbindung und/oder die zweite Verbindung kommunizieren; wobei in diesem Schritt der erste eNodeB und der zweite eNodeB die Verwendung der ersten Verbindung oder der zweiten Verbindung zum Senden gemäß Attributen von zu sendenden Informationen und/oder dem Verbindungsbelastungszustand bestimmen;
wobei der Schritt zum Aufbauen der zweiten Verbindung durch den ersten eNodeB und den zweiten eNodeB umfasst:
durch den ersten eNodeB, Austauschen von Informationen zum Aufbauen der zweiten Verbindung über die erste Verbindung mit dem zweiten eNodeB; und/oder wobei der erste eNodeB mit dem zweiten eNodeB uplink- und/oder downlink-synchronisiert ist.

2. Verfahren nach Anspruch 1, wobei vor dem Aufbauen der zweiten Verbindung durch den ersten eNodeB und den zweiten eNodeB der erste eNodeB und der zweite eNodeB Informationen zum Angeben einer gegenwärtigen Fähigkeit zum Aufbauen der zweiten Verbindung austauschen und, wenn sowohl der erste eNodeB als auch der zweite eNodeB gegenwärtig die Fähigkeit zum Aufbauen der zweiten Verbindung über die erste Verbindung aufweisen, die zweite Verbindung aufgebaut wird.

3. Verfahren nach Anspruch 1, wobei die erste Verbindung eine drahtgebundene Verbindung ist und der erste eNodeB und der zweite eNodeB Informationen durch bestehende oder neu hinzugefügte Nachrichten der X2-Schnittstelle oder S1-Schnittstelle der drahtgebundenen Verbindung austauschen.

4. Verfahren nach Anspruch 1, wobei die zweite Verbindung eine drahtlose Verbindung ist und die Informationen zum Aufbauen der zweiten Verbindung mindestens eines von den folgenden Elementen umfassen:
Identifikationsinformationen, die durch den ersten eNodeB zum Identifizieren des zweiten eNodeB in der zweiten Verbindung zugewiesen werden;
sicherheitsbezogene Fähigkeitsinformationen, die durch den ersten eNodeB und/oder den zweiten eNodeB unterstützt werden und für die zweite Verbindung verwendet werden;
einen sicherheitsbezogenen Mechanismus oder Algorithmus, der für die zweite Verbindung verwendet wird;
Parameter des sicherheitsbezogenen Mechanismus oder
Algorithmus, der für die zweite Verbindung verwendet wird;
Informationen mit Bezug auf die drahtlose Fähigkeit des zweiten eNodeB, die für die zweite Verbindung verwendet werden;
oder
wobei Signale zur Downlink-Synchronisierung mindestens eines von den Folgenden umfassen: Primary Synchronization Signal (PSS), Secondary Synchronization Signal (SSS) und Cell Reference Signal (CRS); Signale zur Uplink-Synchronisierung mindestens eines von den Folgenden umfassen:
Sounding Reference Signal (SRS), Demodulation Reference Signal (DMRS) und Präambel;
oder
wobei der Schritt des Uplink-Synchronisierens des ersten eNodeB mit dem zweiten eNodeB umfasst:
wenn die zweite Verbindung eine drahtlose Verbindung ist, der zweite eNodeB ein Signal zur Uplink-Synchronisierung auf eine drahtlose Weise sendet;
der erste eNodeB einen Zeitanpassungsbetrag des ersten eNodeB gemäß dem empfangenen Signal zur Uplink-Synchronisierung bestimmt und den Zeitanpassungsbetrag über die erste Verbindung oder auf die drahtlose Weise an den zweiten eNodeB sendet;
der zweite eNodeB mit dem ersten eNodeB gemäß dem empfangenen Zeitanpassungsbetrag uplink-synchronisiert wird,
der zweite eNodeB vorzugsweise eine bestimmte Ressource verwendet oder eine bestimmte Ressource in einer bestimmten Ressourcenmenge auswählt, um das Signal zur Uplink-Synchronisierung zu senden; wobei die bestimmte Ressource oder die bestimmte Ressourcenmenge durch den ersten eNodeB über die erste Verbindung oder auf die drahtlose Weise an den zweiten eNodeB gesendet wird.

5. Verfahren nach Anspruch 1, wobei die zweite Verbindung eine drahtlose Verbindung ist, wobei das Kommunizieren des ersten eNodeB mit dem zweiten eNodeB über die zweite Verbindung das Senden von user-plane-verzögerungsempfindlichen Informationen sowie das Senden von control-plane-verzögerungsempfindlichen Informationen durch Physical-Layer-Steuerinformationen, MAC-Layer-Steuerinformationen oder eine dedizierte RRC-Layer-Signalisierung umfasst.

6. eNodeB, der umfasst:
eine Verbindungsaufbaueinheit, die ausgebildet ist, um: eine zweite Verbindung mit einem Peer-End-eNodeB aufzubauen, der über eine erste Verbindung mit dem eNodeB kommuniziert; eine Kommunikationseinheit, die ausgebildet ist, um: über die erste Verbindung und/oder die zweite Verbindung mit dem Peer-End-eNodeB zu kommunizieren;
wobei die Kommunikationseinheit ferner ausgebildet ist, um die Verwendung der ersten Verbindung oder der zweiten Verbindung zum Senden gemäß Attributen von zu sendenden Informationen und/oder dem Verbindungsbelastungszustand zu bestimmen;
wobei die Verbindungsaufbaueinheit umfasst:
ein Informationsaustauschmodul, das ausgebildet ist, um über die erste Verbindung Informationen zum Aufbauen der zweiten Verbindung mit dem Peer-End-eNodeB auszutauschen; und/oder
ein Signalsynchronisationsmodul, das ausgebildet ist, um Uplink- und Downlink-Signale mit dem Peer-End-eNodeB zu synchronisieren.

7. eNodeB nach Anspruch 6, wobei der eNodeB ferner eine Fähigkeitsinformationsaustauscheinheit umfasst, die ausgebildet ist, um vor dem Aufbauen der zweiten Verbindung zwischen dem eNodeB und dem Peer-End-eNodeB Informationen zum Angeben einer gegenwärtigen Fähigkeit zum Aufbauen der zweiten Verbindung mit dem Peer-End-eNodeB auszutauschen und, wenn sowohl der eNodeB als auch der Peer-End-eNodeB gegenwärtig die Fähigkeit zum Aufbauen der zweiten Verbindung aufweisen, die Verbindungsaufbaueinheit die zweite Verbindung aufbaut.

8. eNodeB nach Anspruch 7, wobei die erste Verbindung eine drahtgebundene Verbindung ist und die Fähigkeitsinformationsaustauscheinheit oder das Informationsaustauschmodul des eNodeB Informationen über bestehende oder neu hinzugefügte Nachrichten der X2-Schnittstelle oder S1-Schnittstelle der drahtgebundenen Verbindung austauschen.

9. eNodeB nach Anspruch 7, wobei die zweite Verbindung eine drahtlose Verbindung ist und die Informationen zum Aufbauen der zweiten Verbindung mindestens eines von den folgenden Elementen umfassen:
Identifikationsinformationen, die durch den eNodeB zum Identifizieren des Peer-End-eNodeB in der zweiten Verbindung zugewiesen werden;
sicherheitsbezogene Fähigkeitsinformationen, die durch den eNodeB unterstützt werden und für die zweite Verbindung verwendet werden;
einen sicherheitsbezogenen Mechanismus oder Algorithmus, der für die zweite Verbindung verwendet wird;
Parameter des sicherheitsbezogenen Mechanismus oder Algorithmus, der für die zweite Verbindung verwendet wird;
Informationen mit Bezug auf die drahtlose Fähigkeit des Peer-End-eNodeB, die für die zweite Verbindung verwendet werden;
oder
wobei Downlink-Signale zur Synchronisierung mindestens eines von Folgendem umfassen: Primary Synchronization Signal (PSS), Secondary Synchronization Signal (SSS) und Cell Reference Signal (CRS); und Uplink-Signale zur Synchronisierung mindestens eines von Folgendem umfassen:
Sounding Reference Signal (SRS), Demodulation Reference Signal (DMRS) und Präambel;
oder
wobei das Signalsynchronisationsmodul umfasst:
ein Uplink-Signal-Sende-Untermodul, das ausgebildet ist, um über die erste Verbindung oder auf eine drahtlose Weise ein Uplink-Signal zur Synchronisierung mit dem Peer-End-eNodeB zu senden, der über die erste Verbindung mit dem eNodeB kommuniziert;
ein Zeitanpassungsbetrag-Sende-Untermodul, das ausgebildet ist, um einen Zeitanpassungsbetrag gemäß einem empfangenen Uplink-Signal zur Synchronisierung zu empfangen und über die erste Verbindung oder auf die drahtlose Weise den Zeitanpassungsbetrag an den Peer-End-eNodeB zu senden, der über die erste Verbindung mit dem eNodeB kommuniziert;
ein Uplink-Synchronisierungsuntermodul, das ausgebildet ist, um mit dem Peer-End-eNodeB, der mit dem eNodeB über die erste Verbindung kommuniziert,
gemäß dem Zeitanpassungsbetrag uplink-synchronisiert zu werden,
das Uplink-Signal-Sende-Untermodul vorzugsweise eine bestimmte Ressource verwendet oder eine bestimmte Ressource von einer bestimmten Ressourcenmenge zum Senden des Uplink-Signals zur Synchronisierung auswählt; das Signalsynchronisierungsmodul ferner ein Ressourceninformationssendemodul umfasst, das ausgebildet ist, um die bestimmte Ressource oder die bestimmte Ressourcenmenge über Broadcast- oder
Unicast-Nachrichten in der ersten Verbindung oder auf die drahtlose Weise zu senden.

10. eNodeB nach Anspruch 6, wobei die Kommunikationseinheit user-planeverzögerungsempfindliche Informationen über die zweite Verbindung sendet sowie control-planeverzögerungsempfindliche Informationen durch Physical-Layer-Steuerinformationen, MAC-Layer-Steuerinformationen oder eine dedizierte RRC-Layer-Signalisierung sendet.

11. Kommunikationssystem, das einen ersten eNodeB und einen zweiten eNodeB umfasst, wobei eine erste Verbindung und eine zweite Verbindung zur Kommunikation zwischen dem ersten eNodeB und dem zweiten eNodeB vorhanden ist und der erste eNodeB und der zweite eNodeB Folgendes umfassen: eine Kommunikationseinheit, die ausgebildet ist zum:
Kommunizieren mit dem ersten eNodeB oder dem zweiten eNodeB über die erste Verbindung und/oder die zweite Verbindung,
wobei der erste eNodeB und der zweite eNodeB ausgebildet sind, um die Verwendung der ersten Verbindung oder der zweiten Verbindung zum Senden gemäß Attributen von zu sendenden Informationen und/oder dem Verbindungsbelastungszustand zu bestimmen;
wobei der erste eNodeB über die erste Verbindung Informationen zum Aufbauen der zweiten Verbindung mit dem zweiten eNodeB austauscht, und/oder wobei der erste eNodeB mit dem zweiten eNodeB uplink- und/oder downlink-synchronisiert ist.

12. Kommunikationssystem nach Anspruch 11, wobei der erste eNodeB und der zweite eNodeB ferner umfassen:
eine Verbindungsbestimmungseinheit, die ausgebildet ist zum: Bestimmen einer Verbindung, die die Kommunikationseinheit zur Kommunikation benutzt, gemäß Attributen von zu sendenden Informationen oder einem Verbindungsbelastungszustand;
oder
wobei die Verbindungsbestimmungseinheit ausgebildet ist zum: wenn die zu sendenden Informationen nicht verzögerungsempfindliche Informationen sind, Bestimmen, dass eine Verbindung zur Kommunikation die erste Verbindung ist; wenn die zu sendenden Informationen verzögerungsempfindliche Informationen sind, Bestimmen, dass die Verbindung zur Kommunikation die zweite Verbindung ist, wobei vorzugsweise die erste Verbindung eine drahtgebundene Verbindung ist und die zweite Verbindung eine drahtlose Verbindung ist.

13. Kommunikationssystem nach Anspruch 11, wobei die Kommunikationseinheit ausgebildet ist zum:
gleichzeitigen Verwenden der ersten Verbindung und der zweiten Verbindung zum Kommunizieren oder Verwenden der ersten Verbindung und der zweiten Verbindung zum Kommunizieren auf eine Zeitteilungsweise.

## Revendications

1. Procédé d'établissement d'une liaison, le procédé comprenant :
un premier eNodeB et un second eNodeB établissant une seconde liaison par le biais d'une première liaison entre le premier eNodeB et le second eNodeB ;
le premier eNodeB et le second eNodeB communiquant par le biais de la première liaison et/ou de la seconde liaison ; dans lequel, à cette étape, le premier eNodeB et le second eNodeB déterminent l'utilisation de la première liaison ou de la seconde liaison pour la transmission en fonction d'attributs des informations à transmettre et/ou de l'état de charge de la liaison ;
dans lequel l'étape de l'établissement par le premier eNodeB et le second eNodeB de la seconde liaison comprend : l'échange par le premier eNodeB par le biais de la première liaison d'informations pour l'établissement de la seconde liaison avec le second eNodeB ; et/ou la synchronisation en liaison montante et/ou en liaison descendante du premier eNodeB avec le second eNodeB.

2. Procédé selon la revendication 1, dans lequel avant l'établissement par le premier eNodeB et le second eNodeB de la seconde liaison, le premier eNodeB et le second eNodeB échangent des informations permettant d'indiquer une capacité d'établir actuellement la seconde liaison, et lorsque le premier eNodeB et le second eNodeB ont actuellement tous deux la capacité d'établir la seconde liaison par le biais de la première liaison, la seconde liaison est établie.

3. Procédé selon la revendication 1, dans lequel la première liaison est une liaison câblée, et le premier eNodeB et le second eNodeB échangent des informations par l'intermédiaire de messages existants ou nouvellement ajoutés d'interface X2 ou d'interface S1 de la liaison câblée.

4. Procédé selon la revendication 1, dans lequel la seconde liaison est une liaison sans fil, et les informations permettant d'établir la seconde liaison comprennent au moins l'un des éléments suivants :
des informations d'identification attribuées par le premier eNodeB pour identifier le second eNodeB dans la seconde liaison ;
des informations de capacité relatives à la sécurité prises en charge par le premier eNodeB et/ou le second eNodeB et utilisées pour la seconde liaison ;
un mécanisme ou un algorithme relatif à la sécurité utilisé pour la seconde liaison ;
des paramètres du mécanisme ou de l'algorithme relatif à la sécurité utilisé pour la seconde liaison ;
des informations relatives à la capacité sans fil du second eNodeB utilisées pour la seconde liaison ;
ou
dans lequel les signaux pour la synchronisation en liaison descendante comprennent au moins l'un des signaux suivants : un signal de synchronisation principal (PSS), un signal de synchronisation secondaire (SSS), et un signal de référence de cellule (CRS) ; les signaux pour la synchronisation en liaison montante comprennent au moins l'un des signaux suivants :
un signal de référence sonore (SRS), un signal de référence de démodulation (DMRS) et un préambule ;
ou
dans lequel l'étape de synchronisation en liaison montante du premier eNodeB avec le second eNodeB comprend :
lorsque la seconde liaison est une liaison sans fil, la transmission sans fil par le second eNodeB d'un signal pour la synchronisation en liaison montante ;
la détermination par le premier eNodeB d'une quantité de réglage de synchronisation du premier eNodeB en fonction du signal reçu pour la synchronisation en liaison montante, et la transmission de la quantité de réglage de synchronisation au second eNodeB par le biais de la première liaison ou sans fil ;
le second eNodeB étant synchronisé en liaison montante avec le premier eNodeB en fonction de la quantité de réglage de synchronisation reçue,
de préférence, le second eNodeB utilise une ressource particulière ou sélectionne une ressource particulière dans un ensemble de ressources particulières pour transmettre le signal pour la synchronisation en liaison montante ; dans lequel la ressource particulière ou l'ensemble de ressources particulières est transmis(e) par le premier eNodeB au second eNodeB par le biais de la première liaison ou sans fil.

5. Procédé selon la revendication 1, dans lequel la seconde liaison est une liaison sans fil, le premier eNodeB communiquant avec le second eNodeB par le biais de la seconde liaison comprend la transmission d'informations sensibles au retard sur le plan de l'utilisateur ainsi que la transmission d'informations sensibles au retard sur le plan de commande par le biais d'informations de commande de couche physique, d'informations de commande de couche MAC ou d'une signalisation dédiée de couche RRC.

6. eNodeB, comprenant :
une unité d'établissement de liaison, configurée pour : établir une seconde liaison par le biais d'un eNodeB pair d'extrémité communiquant avec le eNodeB par le biais d'une première liaison ; une unité de communication, configurée pour : communiquer avec le eNodeB pair d'extrémité par le biais de la première liaison et/ou de la seconde liaison ;
dans lequel l'unité de communication est en outre configurée pour déterminer l'utilisation de la première liaison ou de la seconde liaison pour la transmission en fonction d'attributs des informations à transmettre et/ou de l'état de charge de la liaison ;
dans lequel l'unité d'établissement de liaison comprend :
un module d'échange d'informations, configuré pour échanger, par le biais de la première liaison, des informations permettant d'établir la seconde liaison avec le eNodeB pair d'extrémité ; et/ou
un module de synchronisation de signal, configuré pour synchroniser les signaux en liaison montante et en liaison descendante avec le eNodeB pair d'extrémité.

7. eNodeB selon la revendication 6, dans lequel le eNodeB comprend en outre une unité d'échange d'informations de capacité, configurée pour, avant d'établir la seconde liaison entre le eNodeB et le eNodeB pair d'extrémité, échanger des informations permettant d'indiquer une capacité d'établir actuellement la seconde liaison avec le eNodeB pair d'extrémité, et lorsque le eNodeB et le eNodeB pair d'extrémité ont actuellement tous deux la capacité d'établir la seconde liaison, l'unité d'établissement de liaison établit la seconde liaison.

8. eNodeB selon la revendication 7, dans lequel la première liaison est une liaison câblée, et l'unité d'échange d'informations de capacité ou le module d'échange d'informations du eNodeB échangent des informations par l'intermédiaire de messages existants ou nouvellement ajoutés d'interface X2 ou d'interface S1 de la liaison câblée.

9. eNodeB selon la revendication 7, dans lequel la seconde liaison est une liaison sans fil, et les informations permettant d'établir la seconde liaison comprennent au moins l'un des éléments suivants :
des informations d'identification attribuées par le eNodeB pour identifier le eNodeB pair d'extrémité dans la seconde liaison ;
des informations de capacité relatives à la sécurité prises en charge par le eNodeB et utilisées pour la seconde liaison ;
un mécanisme ou un algorithme relatif à la sécurité utilisé pour la seconde liaison ;
des paramètres du mécanisme ou de l'algorithme relatif à la sécurité utilisé pour la seconde liaison ;
des informations relatives à la capacité sans fil du eNodeB pair d'extrémité utilisé pour la seconde liaison ;
ou
dans lequel les signaux en liaison descendante pour la synchronisation comprennent au moins l'un des signaux suivants : un signal de synchronisation principal (PSS), un signal de synchronisation secondaire (SSS), et un signal de référence de cellule (CRS) ; les signaux en liaison montante pour la synchronisation comprennent au moins l'un des signaux suivants :
un signal de référence sonore (SRS), un signal de référence de démodulation (DMRS) et un préambule ;
ou
dans lequel le module de synchronisation de signal comprend :
un sous-module de transmission de signal en liaison montante, configuré pour transmettre, par le biais de la première liaison ou sans fil, un signal en liaison montante pour la synchronisation au eNodeB pair d'extrémité communiquant avec le eNodeB par le biais de la première liaison ;
un sous-module de transmission de quantité de réglage de synchronisation, configuré pour déterminer une quantité de réglage de synchronisation en fonction d'un signal en liaison montante reçu pour la synchronisation, et transmettre, par le biais de la première liaison ou sans fil, la quantité de réglage de synchronisation au eNodeB pair d'extrémité communiquant avec le eNodeB par le biais de la première liaison ;
un sous-module de synchronisation en liaison montante, configuré pour être synchronisé en liaison montante avec le eNodeB pair d'extrémité communiquant avec le eNodeB par le biais de la première liaison en fonction de la quantité de réglage de synchronisation,
de préférence, le sous-module de transmission de signal en liaison montante utilise une ressource particulière ou sélectionne une ressource particulière parmi un ensemble de ressources particulières pour la transmission du signal en liaison montante pour la synchronisation ; le module de synchronisation de signal comprend en outre un module de transmission d'informations de ressource, configuré pour transmettre la ressource particulière ou l'ensemble de ressources particulières par le biais de messages de diffusion ou de monodiffusion dans la première liaison ou sans fil.

10. eNodeB selon la revendication 6, dans lequel l'unité de communication transmet des informations sensibles au retard sur le plan de l'utilisateur par le biais de la seconde liaison ainsi que transmet des informations sensibles au retard sur le plan de commande par l'intermédiaire d'informations de commande de couche physique, d'informations de commande de couche MAC ou d'une signalisation dédiée de couche RRC.

11. Système de communication, comprenant un premier eNodeB et un second eNodeB, dans lequel se trouvent une première liaison et une seconde liaison pour la communication entre le premier eNodeB et le second eNodeB, et le premier eNodeB et le second eNodeB comprennent : une unité de communication, configurée pour : communiquer avec le premier eNodeB ou le second eNodeB par le biais de la première liaison et/ou de la seconde liaison,
dans lequel le premier eNodeB et le second eNodeB sont configurés pour déterminer l'utilisation de la première liaison ou de la seconde liaison pour la transmission en fonction d'attributs des informations à transmettre et/ou de l'état de charge de la liaison ; dans lequel le premier eNodeB échange par le biais de la première liaison des informations permettant d'établir la seconde liaison avec le second eNodeB, et/ou le premier eNodeB est synchronisé en liaison montante et/ou en liaison descendante avec le second eNodeB.

12. Système de communication selon la revendication 11, dans lequel le premier eNodeB et le second eNodeB comprennent en outre : une unité de détermination de liaison, configurée pour : déterminer une liaison que l'unité de communication utilise pour la communication en fonction d'attributs des informations à transmettre ou d'un état de charge de la liaison ;
ou
dans lequel l'unité de détermination de liaison est configurée pour : lorsque les informations à transmettre sont des informations non sensibles au retard, déterminer qu'une liaison pour la communication est la première liaison ; lorsque les informations à transmettre sont des informations sensibles au retard, déterminer que la liaison pour la communication est la seconde liaison, de préférence, la première liaison est une liaison câblée et la seconde liaison est une liaison sans fil.

13. Système de communication selon la revendication 11, dans lequel l'unité de communication est configurée pour : utiliser simultanément la première liaison et la seconde liaison pour communiquer ou utiliser la première liaison et la seconde liaison pour communiquer de manière répartie dans le temps.
